# EUROPEAN PATENT APPLICATION

(11) **EP 4 708 992 A1**
(43) Date of publication of application: **11.03.2026**
(21) Application number: 24844565.2
(22) Date of filing: 02.07.2024
(51) Int. Cl.: H04W 72/04, H04W 72/12

(54) **DATA TRANSMISSION METHOD AND APPARATUS**

(30) Priority: 24.07.2023 CN 202310917702
(71) Applicant: Huawei Technologies Co., Ltd., Shenzhen, Guangdong 518129 (CN)
(72) Inventor: GUO, Senbao, Shenzhen, Guangdong 518129 (CN); WANG, Zhiying, Shenzhen, Guangdong 518129 (CN); ZHU, Yanqing, Shenzhen, Guangdong 518129 (CN); LE, Chunhui, Shenzhen, Guangdong 518129 (CN)
(74) Representative: Grünecker Patent- und Rechtsanwälte PartG mbB
(86) International application number: PCT/CN2024/103008
(87) International publication number: WO 2025/020871

(57) **Abstract**

A data transmission method and apparatus are provided. The method includes: receiving a first buffer status report BSR from a terminal device, where the first BSR indicates that a volume of to-be-transmitted data of the terminal device is 0; sending an uplink grant based on the first BSR, where the uplink grant indicates a first resource and a second resource; detecting a first power corresponding to the first resource; detecting a second power corresponding to the second resource, and detecting that there is a demodulation reference signal DMRS on the second resource; and determining, based on the first power and the second power, that the terminal device receives the uplink grant. According to the method in this application, the terminal device can achieve an energy saving effect. A network device can correctly determine that the terminal device receives the uplink grant and is in an energy saving state, so that detection complexity of the network device is reduced.

## Description

This application claims priority to Chinese Patent Application No. 202310917702.5, filed with the China National Intellectual Property Administration on July 24, 2023 and entitled "DATA TRANSMISSION METHOD AND APPARATUS", which is incorporated herein by reference in its entirety.

### TECHNICAL FIELD

This application relates to the field of communication, and more specifically, to a data transmission method and apparatus.

### BACKGROUND

With development of a 5th generation (5th generation, 5G) mobile communication new radio (new radio, NR) technology, more and more network deployment and application types are supported, including a higher-rate and greater-bandwidth access capability, lower-delay and higher-reliability information exchange, larger-scale and lower-cost access and management of a machine type communication device, and the like. A power consumption problem of a communication device is also becoming prominent.

To ensure minimization of an uplink scheduling delay, a network device still sends an uplink grant (uplink grant signal, UL Grant) to a terminal device even if the terminal device has no data to send. A terminal having no data continuously sends padding data to the network device, causing power consumption of the terminal.

Therefore, a data transmission method for the network device and the terminal device needs to be optimized, so that the network device can correctly detect that the terminal device receives the uplink grant and is in an energy saving state.

### SUMMARY

This application provides a data transmission method and apparatus, where when there is no data to be sent, a terminal device sends no padding data but a pilot signal, so that an energy saving effect can be achieved; and a network device can correctly determine, by detecting a power or the pilot signal, that the terminal device receives an uplink grant and is in an energy saving state, so that detection complexity of the network device is reduced.

According to a first aspect, a data transmission method is provided. The method may be performed by a network device, may be performed by a module (for example, a processor, a chip, or a chip system) used in a network device, or may be implemented by a logical node, a logical module, or software that can implement all or a part of functions of a network device.

The method includes: receiving a first buffer status report BSR from a terminal device, where the first BSR indicates that a volume of to-be-transmitted data of the terminal device is 0; sending an uplink grant based on the first BSR, where the uplink grant indicates a first resource and a second resource; detecting a first power corresponding to the first resource; detecting a second power corresponding to the second resource, and detecting that there is a demodulation reference signal DMRS on the second resource; and determining, based on the first power and the second power, that the terminal device receives the uplink grant.

It should be noted that the first power corresponding to the first resource in this application may be understood as follows: The network device may determine a total power on a resource included in the first resource, and the first power may be an average power value of the total power per resource granularity, for example, per resource element RE. The second power corresponding to the second resource may also be understood in this way. For brevity of description, details are not described subsequently.

It should be understood that when the BSR indicates that the volume of to-be-transmitted data of the terminal device is 0, and the terminal device does not send data, the network device determines, based on the first power and the second power, that the terminal device receives the uplink grant. In this case, the network device may determine that the terminal device receives the uplink grant and is in an energy saving state with no padding data sent.

It should be further understood that only when the DMRS is detected on the second resource, it is determined, based on the first power and the second power, that the terminal device receives the uplink grant. When the DMRS is not detected on the second resource, it may be considered that the terminal device does not receive the uplink grant and is in a discrete transmission DTX state.

According to the solution of this application, the network device can correctly determine, by detecting the two powers, that the terminal device is in the energy saving state, so that detection complexity of the network device is reduced.

With reference to the first aspect, in some implementations of the first aspect, determining, based on the first power and the second power, that the terminal device receives the uplink grant includes: determining a power difference based on the first power and the second power; and determining, based on the power difference, that the terminal device receives the uplink grant.

With reference to the first aspect, in some implementations of the first aspect, determining, based on the first power and the second power, that the terminal device receives the uplink grant includes: when the power difference is greater than a first threshold, determining that the terminal device receives the uplink grant.

It should be understood that because different first thresholds may be set, a description including "when the power difference is greater than or equal to the first threshold" also falls within the protection scope of this application.

To be specific, with reference to the first aspect, in some implementations of the first aspect, determining, based on the first power and the second power, that the terminal device receives the uplink grant includes: when the power difference is greater than or equal to the first threshold, determining that the terminal device receives the uplink grant.

According to the solution of this application, when the network device detects that the terminal device receives the uplink grant but does not send data, the network device may determine that data retransmission does not need to be performed and downlink control channel PDCCH aggregation level adjustment is not performed, so that downlink spectrum resource utilization is ensured.

With reference to the first aspect, in some implementations of the first aspect, the method further includes: sending first configuration information to the terminal device, where the first configuration information indicates a time domain position and/or a frequency domain position of the DMRS in the second resource.

According to the solution of this application, the network device indicates the terminal device to send the DMRS at a part of time domain positions and/or frequency domain positions, to further reduce sending energy consumption of the terminal device and improve an energy saving effect.

According to a second aspect, a data transmission method is provided. The method may be performed by a terminal device, may be performed by a module (for example, a processor, a chip, or a chip system) used in a terminal device, or may be implemented by a logical node, a logical module, or software that can implement all or a part of functions of a terminal device.

The method includes: sending a first buffer status report BSR to a network device, where the first BSR indicates that a volume of to-be-transmitted data of the terminal device is 0; receiving an uplink grant from the network device, where the uplink grant indicates a first resource and a second resource; sending a demodulation reference signal DMRS to the network device on the second resource; and shutting down a symbol or reducing a power on the first resource.

It should be noted that symbol shutdown means shutting down radio frequency hardware such as a power amplifier on a time domain symbol on which no data is sent, to reduce static power consumption. Power reduction means reducing a transmit power by adjusting the transmit power, to reduce power consumption. Therefore, shutting down the symbol or reducing the power on the first resource may also be sending no data on the first resource or saving energy on the first resource.

According to the solution of this application, the terminal device sends no padding (padding) data but a pilot symbol when there is no to-be-transmitted data, so that an energy saving effect can be achieved.

That the terminal device sends no padding (padding) data but the pilot symbol when there is no to-be-transmitted data may be referred to as that the terminal device enters an energy saving state. The state may be correctly detected and recognized by the network device by using the method provided in the first aspect and the corresponding implementations.

With reference to the second aspect, in some implementations of the second aspect, the method further includes: receiving first configuration information from the network device, where the first configuration information indicates a time domain position and/or a frequency domain position of the DMRS in the second resource.

In a possible implementation, the second resource includes at least one time domain symbol, and sending the pilot signal on the second resource includes: sending the pilot signal on one time domain symbol.

In a possible implementation, the second resource includes a plurality of frequency domain resources, and sending the pilot signal on the second resource includes: sending the pilot signal on a part of frequency domain resources.

With reference to the second aspect, in some implementations of the second aspect, sending the demodulation reference signal DMRS to the network device on the second resource includes: when a quantity of received uplink grants corresponding to the first BSR indicating that the volume of to-be-transmitted data is 0 is greater than a second threshold, sending the DMRS to the network device on the second resource.

It should be understood that because different second thresholds may be set, a description including "when the quantity is greater than or equal to the second threshold" also falls within the protection scope of this application.

To be specific, with reference to the second aspect, in some implementations of the second aspect, sending the demodulation reference signal DMRS to the network device on the second resource includes: when the quantity of received uplink grants corresponding to the first BSR indicating that the volume of to-be-transmitted data is 0 is greater than or equal to the second threshold, sending the DMRS to the network device on the second resource.

It should be noted that in this application, the uplink grant corresponding to the first BSR indicating that the volume of to-be-transmitted data is 0 is an uplink grant received when the first BSR indicating that the volume of to-be-transmitted data is 0 is sent. Details are not described subsequently.

In other words, the terminal device collects statistics about the quantity of received uplink grants, and when a quantity of times that the uplink grants correspond to no data sending reaches the second threshold, the terminal device sends the DMRS.

With reference to the second aspect, in some implementations of the second aspect, the method further includes: receiving second configuration information from the network device, where the second configuration information indicates the second threshold.

According to a third aspect, a data transmission method is provided. The method may be performed by a network device, may be performed by a module (for example, a processor, a chip, or a chip system) used in a network device, or may be implemented by a logical node, a logical module, or software that can implement all or a part of functions of a network device.

The method includes: receiving a second buffer status report BSR from a terminal device, where the second BSR indicates that a volume of to-be-transmitted data of the terminal device is 0; sending scheduling information based on the second BSR, where the scheduling information includes indication information, and the indication information indicates sending of a sounding reference signal SRS on a third resource; and monitoring the SRS on the third resource, and determining whether the scheduling information is received.

The scheduling information may be an uplink grant UL grant or a downlink resource scheduling DL grant.

According to the solution of this application, the network device can correctly determine, by detecting a triggered SRS, that the terminal device is in an energy saving state, so that detection complexity of the network device is reduced.

With reference to the third aspect, in some implementations of the third aspect, monitoring the SRS on the third resource, and determining whether the scheduling information is received includes: when the SRS is detected on the third resource, determining that the scheduling information is received; or when the SRS is not detected on the third resource, determining that the scheduling information is not received.

According to the solution of this application, when the network device detects that the terminal device receives the uplink grant but does not send data, the network device may determine that data retransmission does not need to be performed and downlink control channel PDCCH aggregation level adjustment is not performed, so that downlink spectrum resource utilization is ensured.

According to a fourth aspect, a data transmission method is provided. The method may be performed by a terminal device, may be performed by a module (for example, a processor, a chip, or a chip system) used in a terminal device, or may be implemented by a logical node, a logical module, or software that can implement all or a part of functions of a terminal device.

The method includes: sending a second buffer status report BSR to a network device, where the second BSR indicates that a volume of to-be-transmitted data of the terminal device is 0; receiving scheduling information from the network device, where the scheduling information includes indication information, and the indication information indicates sending of a sounding reference signal SRS on a third resource; and sending the SRS based on the indication information.

According to a fifth aspect, a data transmission apparatus is provided. The apparatus includes an interface unit, configured to: receive a first buffer status report BSR from a terminal device, where the first BSR indicates that a volume of to-be-transmitted data of the terminal device is 0; and send an uplink grant based on the first BSR, where the uplink grant indicates a first resource and a second resource.

The apparatus further includes a processing unit, configured to: detect a first power corresponding to the first resource; detect a second power corresponding to the second resource, and detect that there is a demodulation reference signal DMRS on the second resource; and determine, based on the first power and the second power, that the terminal device receives the uplink grant.

With reference to the fifth aspect, in some implementations of the fifth aspect, the processing unit is specifically configured to: determine a power difference based on the first power and the second power; and determine, based on the power difference, that the terminal device receives the uplink grant.

With reference to the fifth aspect, in some implementations of the fifth aspect, the processing unit is specifically configured to: when the power difference is greater than a first threshold, determine that the terminal device receives the uplink grant.

With reference to the fifth aspect, in some implementations of the fifth aspect, the interface unit is further configured to send first configuration information to the terminal device, where the first configuration information indicates a time domain position and/or a frequency domain position of the DMRS in the second resource.

According to a sixth aspect, a data transmission apparatus is provided. The apparatus includes: an interface unit, configured to: send a first buffer status report BSR to a network device, where the first BSR indicates that a volume of to-be-transmitted data of a terminal device is 0; receive an uplink grant from the network device, where the uplink grant indicates a first resource and a second resource; and send a demodulation reference signal DMRS to the network device on the second resource; and a processing unit, configured to shut down a symbol or reduce a power on the first resource.

With reference to the sixth aspect, in some implementations of the sixth aspect, the interface unit is further configured to receive first configuration information from the network device, where the first configuration information indicates a time domain position and/or a frequency domain position of the DMRS in the second resource.

With reference to the sixth aspect, in some implementations of the sixth aspect, the interface unit is specifically configured to: when a quantity of received uplink grants corresponding to the first BSR indicating that the volume of to-be-transmitted data is 0 is greater than a second threshold, send the DMRS to the network device on the second resource.

With reference to the sixth aspect, in some implementations of the sixth aspect, the interface unit is further configured to receive second configuration information from the network device, where the second configuration information indicates the second threshold.

According to a seventh aspect, a data transmission apparatus is provided. The apparatus includes: an interface unit, configured to: receive a second buffer status report BSR from a terminal device, where the second BSR indicates that a volume of to-be-transmitted data of the terminal device is 0; and send scheduling information based on the second BSR, where the scheduling information includes indication information, and the indication information indicates sending of a sounding reference signal SRS on a third resource; and a processing unit, configured to: monitor the SRS on the third resource, and determine whether the scheduling information is received.

With reference to the seventh aspect, in some implementations of the seventh aspect, the processing unit is specifically configured to: when the SRS is detected on the third resource, determine that the scheduling information is received; or when the SRS is not detected on the third resource, determine that the scheduling information is not received.

According to an eighth aspect, a data transmission apparatus is provided. The apparatus includes an interface unit, configured to: send a second buffer status report BSR to a network device, where the second BSR indicates that a volume of to-be-transmitted data of a terminal device is 0; receive scheduling information from the network device, where the scheduling information includes indication information, and the indication information indicates sending of a sounding reference signal SRS on a third resource; and send the SRS based on the indication information.

According to a ninth aspect, a data transmission apparatus is provided. The apparatus may be a network device, may be a component (for example, a processor, a chip, or a chip system) of a network device, or may be a logical node, a logical module, or software that can implement all or a part of functions of a network device. The apparatus has a function of implementing the first aspect and the possible implementations of the first aspect or the third aspect and the possible implementations of the third aspect. The function may be implemented by hardware, or may be implemented by hardware executing corresponding software. The hardware or the software includes one or more modules corresponding to the function.

In a possible design, the apparatus includes an interface unit. The interface unit may be at least one of a transceiver, a receiver, and a transmitter. The interface unit may include a radio frequency circuit or an antenna. Optionally, the apparatus further includes a processing unit. The processing unit may be a processor. Optionally, the apparatus further includes a storage unit. The storage unit may be, for example, a memory. When the apparatus includes the storage unit, the storage unit is configured to store a program or instructions. The processing unit is connected to the storage unit. The processing unit may execute the program and the instructions stored in the storage unit, or instructions from another source, so that the apparatus performs the communication method according to the first aspect and the possible implementations of the first aspect or according to the third aspect and the possible implementations of the third aspect. In this design, the apparatus may be the network device.

In another possible design, when the apparatus is the chip, the chip includes an interface unit and a processing unit. The interface unit may be, for example, an input/output interface, a pin, or a circuit on the chip. The processing unit may be, for example, a processor. The processing unit may execute instructions, so that the chip in the network device performs the communication method according to any one of the first aspect and the possible implementations of the first aspect or according to the third aspect and the possible implementations of the third aspect. Optionally, the processing unit may execute instructions in a storage unit. The storage unit may be a storage module, for example, a register or a cache, in the chip. The storage unit may alternatively be located inside a communication device but outside the chip, for example, a read-only memory (read-only memory, ROM) or another type of static storage device that can store static information and instructions, or a random access memory (random access memory, RAM).

Any processor described above may be a general-purpose central processing unit (CPU), a microprocessor, an application-specific integrated circuit (application-specific integrated circuit, ASIC), or one or more integrated circuits configured to control program execution of the communication method according to the first aspect or the third aspect.

According to a tenth aspect, a data transmission apparatus is provided. The apparatus may be a terminal device, may be a component (for example, a processor, a chip, or a chip system) of a terminal device, or may be a logical node, a logical module, or software that can implement all or a part of functions of a terminal device. The apparatus has a function of implementing the second aspect and the possible implementations of the second aspect or the fourth aspect and the possible implementations of the fourth aspect. The function may be implemented by hardware, or may be implemented by hardware executing corresponding software. The hardware or the software includes one or more modules corresponding to the function.

In a possible design, the apparatus includes an interface unit. The interface unit may be at least one of a transceiver, a receiver, and a transmitter. The interface unit may include a radio frequency circuit or an antenna. Optionally, the apparatus further includes a processing unit. The processing unit may be a processor. Optionally, the apparatus further includes a storage unit. The storage unit may be, for example, a memory. When the apparatus includes the storage unit, the storage unit is configured to store a program or instructions. The processing unit is connected to the storage unit. The processing unit may execute the program and the instructions stored in the storage unit, or instructions from another source, so that the apparatus performs the communication method according to the second aspect and the possible implementations of the second aspect or according to the fourth aspect and the possible implementations of the fourth aspect. In this design, the apparatus may be the terminal device.

In another possible design, when the apparatus is the chip, the chip includes an interface unit and a processing unit. The interface unit may be, for example, an input/output interface, a pin, or a circuit on the chip. The processing unit may be, for example, a processor. The processing unit may execute instructions, so that the chip in the network device performs the communication method according to any one of the second aspect and the possible implementations of the second aspect or according to the fourth aspect and the possible implementations of the fourth aspect. Optionally, the processing unit may execute instructions in a storage unit. The storage unit may be a storage module, for example, a register or a cache, in the chip. The storage unit may alternatively be located inside a communication device but outside the chip, for example, a read-only memory (read-only memory, ROM) or another type of static storage device that can store static information and instructions, or a random access memory (random access memory, RAM).

Any processor described above may be a general-purpose central processing unit (CPU), a microprocessor, an application-specific integrated circuit (application-specific integrated circuit, ASIC), or one or more integrated circuits configured to control program execution of the communication method according to the second aspect or the fourth aspect.

According to an eleventh aspect, a communication system is provided. The communication system includes the communication device provided in the fifth aspect or the seventh aspect, and the communication apparatus provided in the sixth aspect or the eighth aspect. The communication system may complete the data transmission method according to any one of the first aspect to the fourth aspect or the possible implementations of the first aspect to the fourth aspect.

According to a twelfth aspect, a computer-readable storage medium is provided. The computer-readable storage medium stores a computer program. When the computer program is run on a computer, the computer is enabled to execute instructions of the method according to any one of the first aspect to the fourth aspect or the possible implementations of the first aspect to the fourth aspect.

According to a thirteenth aspect, a chip is provided. The chip includes a processing unit. The processing unit may execute instructions to perform the method according to any one of the first aspect to the fourth aspect or the possible implementations of the first aspect to the fourth aspect.

According to a fourteenth aspect, a computer program product is provided. The product includes computer program code. When the computer program code is run, instructions of the method according to any one of the first aspect to the fourth aspect or the possible implementations of the first aspect to the fourth aspect are executed.

According to a fifteenth aspect, a chip system is provided. The chip system includes a memory and a processor. The memory is configured to store instructions. The processor is configured to invoke the instructions from the memory and run the instructions to perform the method according to the first aspect to the fourth aspect and the possible implementations of the first aspect to the fourth aspect.

The chip system may include an input circuit or interface configured to send information or data, and an output circuit or interface configured to receive information or data.

Specifically, for beneficial effects of other aspects, refer to the beneficial effects described in the first aspect and the second aspect.

### BRIEF DESCRIPTION OF DRAWINGS

FIG. 1 is a diagram of a possible system applicable to an embodiment of this application;
FIG. 2 is a possible diagram of data transmission;
FIG. 3 is a diagram of a possible data transmission scenario;
FIG. 4 is a schematic flowchart of a data transmission method according to an embodiment of this application;
FIG. 5 to FIG. 7 are schematic flowcharts of several types of detection performed by a network device according to an embodiment of this application;
FIG. 8 is a schematic flowchart of another data transmission method according to an embodiment of this application;
FIG. 9 is a schematic flowchart of another type of detection performed by a network device according to an embodiment of this application; and
FIG. 10 to FIG. 12 are schematic block diagrams of several communication apparatuses according to this application.

### DESCRIPTION OF EMBODIMENTS

The following describes technical solutions of this application with reference to accompanying drawings.

The technical solutions in embodiments of this application may be applied to various communication systems, for example: a global system for mobile communications (global system for mobile communications, GSM); a code division multiple access (code division multiple access, CDMA) system; a wideband code division multiple access (wideband code division multiple access, WCDMA) system; a general packet radio service (general packet radio service, GPRS); an LTE system; an LTE frequency division duplex (frequency division duplex, FDD) system; LTE time division duplex (time division duplex, TDD); a universal mobile telecommunications system (universal mobile telecommunications system, UMTS); a worldwide interoperability for microwave access (worldwide interoperability for microwave access, WiMAX) communication system; a 5th generation (5th generation, 5G) system or an evolved communication system such as new radio (new radio, NR); vehicle-to-everything (vehicle-to-X, V2X), where V2X may include vehicle-to-network (vehicle-to-network, V2N), vehicle-to-vehicle (vehicle-to-vehicle, V2V), vehicle-to-infrastructure (vehicle-to-infrastructure, V2I), vehicle-to-pedestrian (vehicle-to-pedestrian, V2P), and the like; long term evolution-vehicle (long term evolution-vehicle, LTE-V); an internet of vehicles; machine type communication (machine type communication, MTC); an internet of things (internet of things, IoT); long term evolution-machine (long term evolution-machine, LTE-M); machine to machine (machine to machine, M2M); and device-to-device (device-to-device, D2D).

A terminal device in embodiments of this application may be user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a 5G network, a terminal device in an evolved public land mobile network (public land mobile network, PLMN), or the like. This is not limited in embodiments of this application. For example, the terminal device may be a vehicle-mounted device, an entire vehicle device, a vehicle-mounted module, a vehicle, an on board unit (on board unit, OBU), a roadside unit (roadside unit, RSU), a vehicle-mounted communication unit (telematics box, T-box), a chip, or a system on chip (system on chip, SoC). The chip or the SoC may be installed in a vehicle, an OBU, an RSU, or a T-box.

The terminal device in embodiments of this application further includes at least any one of: user equipment; an augmented reality AR/virtual reality VR/extended reality XR device; a wearable device; a smart appliance terminal; a terminal device and a communication module of the terminal device; a mobile phone and a communication module in the mobile phone; a vehicle and a communication module in the vehicle; an information processing device; a display device; a network apparatus; a base station; a TRP; customer premises equipment (customer premises equipment, CPE); a router; a network access device; and the like. In terms of Uu (UTRAN-to-terminal device) air interface transmission, both parties of wireless communication include a network apparatus and a user communication device. In terms of SL air interface transmission, a receiving end and a transmitting end of wireless communication are both user communication devices. The network apparatus may be a conventional macro base station eNB in a conventional UMTS/LTE wireless communication system, may be a micro base station eNB in a heterogeneous network (heterogeneous network, HetNet) scenario, may be a baseband processing unit (baseband unit, BBU) and a remote radio unit (remote radio unit, RRU) in a distributed base station scenario, may be a baseband pool BBU pool and a radio frequency unit RRU in a CRAN scenario, or may be a gNB in a wireless communication system.

In embodiments of this application, a network device may be any device having a wireless transceiver function. The device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. Alternatively, the device may be a gNB or a transmission point (TRP or TP) in a 5G system, for example, an NR system, or one antenna panel or a group of antenna panels (including a plurality of antenna panels) of a base station in a 5G system, or may be a network node, for example, a baseband unit (BBU) or a distributed unit (distributed unit, DU), that constitutes a gNB or a transmission point.

In some deployments, the gNB may include a central unit (central unit, CU) and a DU. The gNB may further include an active antenna unit (active antenna unit, AAU). The CU implements a part of functions of the gNB, and the DU implements a part of functions of the gNB. For example, the CU is responsible for processing a non-real-time protocol and a service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a medium access control (medium access control, MAC) layer, and a physical (physical, PHY) layer. The AAU implements a part of physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

The network device serves a cell, and the terminal device communicates with the cell by using a transmission resource (for example, a frequency domain resource or a spectrum resource) allocated by the network device. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), or the like. These small cells have characteristics of small coverage and low transmit power, and are applicable to providing a high-rate data transmission service.

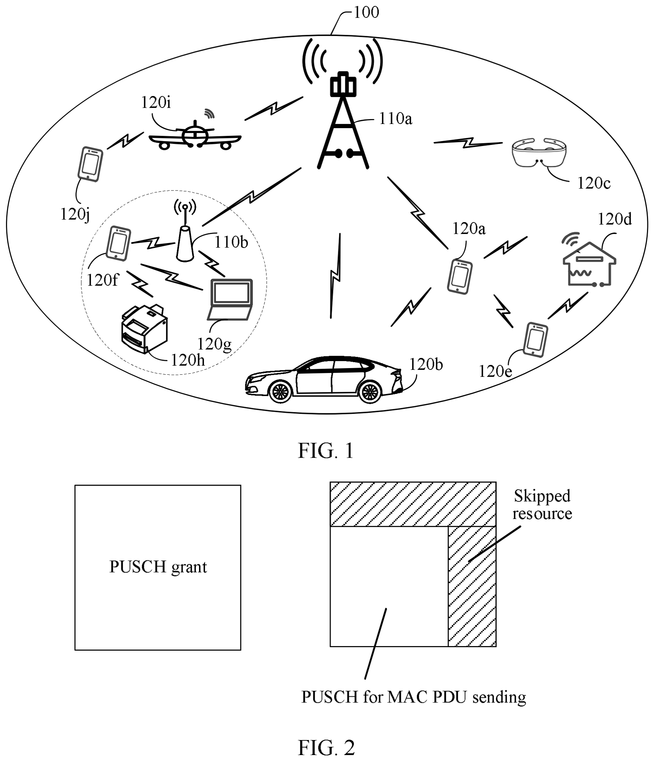

FIG. 1 is a diagram of a possible non-limiting system applicable to an embodiment of this application.

As shown in FIG. 1, the communication system includes a radio access network (radio access network, RAN) 100. The RAN 100 includes at least one RAN node (for example, 110a and 110b in FIG. 1, which are collectively referred to as 110) and at least one terminal device (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the RAN node 110 in a wireless manner. The RAN node 110 is connected to a core network 200 in a wireless or wired manner. A core network device in the core network 200 and the RAN node 110 in the RAN 100 may be different physical devices, or may be a same physical device that integrates a core network logical function and a radio access network logical function.

The RAN 100 may be a cellular system related to the 3rd generation partnership project (3rd generation partnership project, 3GPP), for example, a 4G mobile communication system, a 5G mobile communication system, or a future-oriented evolved system (for example, a 6G mobile communication system). The RAN 100 may alternatively be an open access network (open RAN, O-RAN or ORAN), a cloud radio access network (cloud radio access network, CRAN), or a wireless fidelity (wireless fidelity, Wi-Fi) system. The RAN 100 may alternatively be a communication system that integrates two or more of the foregoing systems.

The RAN node 110 may also be sometimes referred to as an access network device, a network device, a RAN entity, an access node, or the like, and forms a part of the communication system, to help the terminal implement radio access. A plurality of RAN nodes 110 in the communication system may be nodes of a same type, or may be nodes of different types. In some scenarios, roles of the RAN node 110 and the terminal 120 are relative. For example, the network element 120i in FIG. 1 may be a helicopter or an uncrewed aerial vehicle, and may be configured as a mobile base station. For the terminal 120j that accesses the RAN 100 via the network element 120i, the network element 120i is a base station. However, for the base station 110a, the network element 120i is a terminal. Sometimes, the RAN node 110 and the terminal 120 are both referred to as communication apparatuses. For example, the network elements 110a and 110b in FIG. 1 may be understood as communication apparatuses having a base station function, and the network elements 120a to 120j may be understood as communication apparatuses having a terminal function.

In a possible scenario, the RAN node may be a base station (base station), an evolved base station (evolved NodeB, eNodeB), an access point (access point, AP), a transmission reception point (transmission reception point, TRP), a next generation base station (next generation NodeB, gNB), a next generation base station in a 6th generation (6th generation, 6G) mobile communication system, a base station in a future mobile communication system, an access node in a Wi-Fi system, or the like. The RAN node may be a macro base station (for example, 110a in FIG. 1), a micro base station or an indoor station (for example, 110b in FIG. 1), a relay node or a donor node, or a radio controller in a CRAN scenario. Optionally, the RAN node may alternatively be a server, a wearable device, a vehicle, a vehicle-mounted device, or the like. For example, an access network device in a vehicle-to-everything (vehicle-to-everything, V2X) technology may be a roadside unit (roadside unit, RSU). All or a part of functions of the RAN node in this application may alternatively be implemented by using a software function running on hardware, or may be implemented by using a virtualization function instantiated on a platform (for example, a cloud platform). Alternatively, the RAN node in this application may be a logical node, a logical module, or software that can implement all or a part of functions of the RAN node.

In another possible scenario, the plurality of RAN nodes cooperate to assist the terminal in implementing radio access, and different RAN nodes separately implement a part of functions of the base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP and the CU-UP), the DU, and the RU in this application may be implemented by using a software module, a hardware module, or a combination of a software module and a hardware module.

The RAN node may alternatively be described differently. Unless otherwise specified, in this application, the RAN node is described by using a network device.

It should be understood that FIG. 1 is merely a diagram, and another device that is not shown may be further included. In addition, a quantity of terminal devices and a quantity of network devices included in the communication system are not limited in embodiments of this application.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). An operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in this application is not particularly limited in this application, provided that communication can be performed according to the method provided in embodiments of this application by running a program that records code of the method provided in this application. For example, the method provided in embodiments of this application may be performed by a terminal device or a network device, or a functional module that is in a terminal device or a network device and that can invoke the program and execute the program.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, a computer-readable storage medium may include but is not limited to a magnetic storage device (for example, a hard disk drive, a floppy disk, or a magnetic tape), an optical disc (for example, a compact disc (compact disc, CD) or a digital versatile disc (digital versatile disc, DVD)), a smart card, and a flash memory device (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable medium" may include but is not limited to a radio channel, and various other media that can store, contain, and/or carry instructions and/or data.

In this application, "sending information to ... (a terminal)" may be understood as that a destination end of the information is the terminal, and may include directly or indirectly sending the information to the terminal. "Receiving information from ... (a terminal)" may be understood as that a source end of the information is the terminal, and may include directly or indirectly receiving the information from the terminal. Information may undergo necessary processing, for example, a format change, between a source end and a destination end for sending of the information. However, the destination end may understand valid information from the source end. A similar expression in this application may be understood similarly, and details are not described herein again.

For ease of understanding of embodiments of this application, concepts and technologies used in embodiments of this application are first briefly described.

It should be understood that related terms and descriptions below are applicable to all embodiments in this specification. Different embodiments may be used independently, or may be used in combination based on some internal or external relationships. Different implementations in embodiments may be used independently or in combination.

### 1. Reference signal (reference signal, RS)

The reference signal may also be referred to as a pilot signal (pilot signal), and is a known signal provided by a transmitting end device for a receiving device for channel estimation, channel measurement, channel detection, channel demodulation, or the like. In embodiments of this application, the reference signal may be used in a physical layer (physical layer), and does not carry data information from a higher layer. In addition, the reference signal may include a downlink reference signal and an uplink reference signal.

The downlink reference signal includes a downlink cell-specific reference signal (cell-specific reference signal, CRS), a downlink terminal device-specific reference signal (UE-specific reference signal, UE-RS), a channel state information reference signal (channel state information reference signal, CSI-RS) for downlink channel measurement, a downlink group-specific reference signal (group-specific reference Signal, GRS), a downlink positioning reference signal (positioning RS, PRS), a downlink beam reference signal (beam reference signal, BRS), a downlink beam refinement reference signal (beam refinement reference signal, BRRS), a downlink phase compensation reference signal (phase compensation reference signal, PCRS), or the like. The downlink UE-RS is also referred to as a downlink demodulation reference signal (demodulation reference signal, DMRS). The uplink reference signal includes a demodulation reference signal DMRS for uplink demodulation, a sounding reference signal (sounding reference signal, SRS) for uplink channel measurement, an uplink PCRS, or the like. A DMRS for physical uplink control channel (physical uplink control channel, PUCCH) demodulation is referred to as a PUCCH DMRS, and a DMRS for physical uplink shared channel (physical uplink shared channel, PUSCH) demodulation is referred to as a PUSCH DMRS. It should be understood that the foregoing listed reference signals are merely examples, and should not constitute any limitation on this application. This application does not exclude a possibility of defining another reference signal in a future protocol to implement a same or similar function.

### 2. Padding (padding)

When a terminal device has no data to send but receives an uplink grant, the terminal device sends padding (padding) byte data, so that a network device can correctly recognize a status of the terminal device.

In an NR field service scenario, a proportion of uplink and downlink padding bytes is high. This phenomenon occurs for different vendors, with the proportion being significant in game and voice scenarios. In a downlink scenario, for example, FTP download and large file download scenarios, a corresponding proportion of paddings is low. In a video service, a corresponding proportion of paddings is about 10% to 30%. In game, voice, and live-streaming scenarios, a proportion of downlink paddings is greater than 60%.

In an uplink scenario, for example, a file transfer protocol (file transfer protocol, FTP) upload scenario, a corresponding proportion of paddings is low. In another scenario, a corresponding proportion of uplink paddings is high, and there is a difference between network devices.

Main reasons for high proportion of padding bytes are as follows.
(1) In a small-packet transmission scenario, for example, the game and voice scenarios, there is extensive pre-scheduling. For example, in the game scenario, there is a case in which a large quantity of paddings are sent, but a BSR indicating 0 is sent.
(2) For a service with an actual requirement, during a buffer status report (buffer status report, BSR) process, after a level is reported, resources actually configured by the network device exceed a required amount. For example, an actual requirement of the terminal device is 1879 bytes, and a BSR indicating 17 is sent. For bytes<=2014 bytes, the network device correspondingly configures 2754 bytes actually.
(3) There is no significant modulation and coding scheme (modulation and coding scheme, MCS) index reduction behavior in uplink. Even if few resource blocks (resource blocks, RBs) are scheduled, a corresponding transport block size (transfer block size, TBsize) is large, resulting in a large quantity of padding bits.

### 3. Cyclic redundancy check (cyclic redundancy check, CRC)

After receiving data sent by a terminal device, a network device side needs to perform equalization and decoding on the data to restore bit-level information. A network device determines, through cyclic redundancy check, whether the corresponding data is correctly received. If the corresponding data is correctly received, a corresponding cyclic redundancy check bit is equal to 0 (that is, CRC=0); or if the corresponding data is not correctly received, a corresponding cyclic redundancy check bit is equal to 1 (that is, CRC=1).

FIG. 2 is a possible diagram of data transmission. As shown in FIG. 2, when the terminal device sends data, if a quantity of resources allocated by the network device is greater than an actually transmitted data volume, the terminal device may send a PUSCH on a quantity of resources corresponding to the actual data volume, to achieve a partial energy saving effect.

It should be understood that in the foregoing transmission solution, when the terminal device has no data to send, if the terminal device does not send data, the network device side considers that the terminal device does not correctly detect an uplink grant UL-grant. Consequently, the network device adjusts a PDCCH aggregation level, reducing downlink spectrum resource utilization.

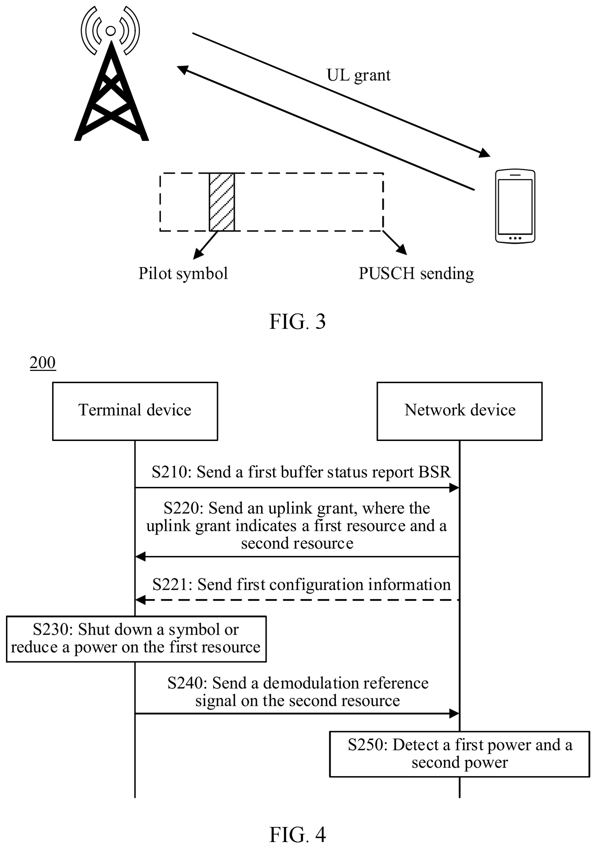

As shown in FIG. 3, the terminal device has no data to send, but the network device still sends a UL-grant to the terminal, to ensure minimization of an uplink scheduling delay.

Based on the foregoing scenario, this application provides a data transmission method. The terminal device selects to send no data but a pilot symbol, to implement energy saving. The network device can correctly recognize that the terminal device has no data to send instead of not correctly receiving the UL-grant.

It may be understood that in a diagram of the method in this application, an example in which the network device and the terminal device are execution bodies of interaction illustration is used to illustrate the method. However, an execution body of the interaction illustration are not limited in this application. For example, the network device in the figure may alternatively be a module (for example, a chip, a chip system, or a processor) used in the network device, or may be a logical node, a logical module, or software that can implement all or a part of functions of the network device. The terminal device in the figure may alternatively be a module (for example, a chip, a chip system, or a processor) used in the terminal device, or may be a logical node, a logical module, or software that can implement all or a part of functions of the terminal device.

FIG. 4 is a diagram of a data transmission method 200 according to an embodiment of this application. As shown in FIG. 4, the method 200 includes at least the following steps.

S210: A terminal device sends a first buffer status report BSR to a network device; and correspondingly, the network device receives the first BSR.

The BSR is used to report a volume of to-be-transmitted data in an uplink buffer of the terminal device to the network device.

The first BSR indicates that the volume of to-be-transmitted data of the terminal device is 0, that is, the terminal device has no to-be-transmitted data.

S220: The network device sends an uplink grant UL grant to the terminal device based on the first BSR; and correspondingly, the terminal device receives the uplink grant.

It should be understood that the network device still sends the uplink grant to the terminal to minimize an uplink scheduling delay.

The network device determines, based on the BSR sent by the terminal device, whether the terminal device has to-be-transmitted uplink data. The uplink grant indicates an uplink transmission resource that can be used by the terminal device.

The uplink grant may indicate a first resource and a second resource.

The first resource is a resource that can be used by the terminal device for uplink transmission of data or padding data. The second resource is a resource that is used by the terminal device for uplink transmission of a pilot signal.

It should be understood that the resource in this application may be a time domain resource, a frequency domain resource, or a time-frequency resource. The time domain resource includes a symbol (symbol), a slot (slot), a mini-slot (mini-slot), a partial slot (partial slot), a subframe (subframe), a radio frame (frame), a sensing slot (sensing slot), and the like. The frequency domain resource includes a resource element (resource element, RE), a resource block RB, an RB set (set), a subchannel (subchannel), a bandwidth part (bandwidth part, BWP), a carrier (carrier), a channel (channel), an interlace (interlace), and the like.

S230: The terminal device shuts down a symbol or reduces a power on the first resource.

In other words, the terminal device does not send data on the first resource on which the padding data is originally sent, but shuts down the symbol or reduces the power. This effectively reduces power consumption of the terminal device, and achieves an energy saving effect.

S240: The terminal device sends a demodulation reference signal DMRS on the second resource.

When the first BSR indicates that the volume of to-be-transmitted data of the terminal device is 0, the terminal device sends no data but the DMRS on the second resource.

After the terminal device receives the uplink grant sent by the network device, if the terminal device has no service data to send, the terminal device sends one or more pilot resource elements. The pilot resource element includes one or more pilot OFDM symbols. Alternatively, the pilot resource element includes one or more frequency domain pilot subcarriers on one or more OFDM symbols.

Optionally, the method 200 may further include 221: The network device sends first configuration information; and correspondingly, the terminal device receives the first configuration information.

The first configuration information indicates a time domain position and/or a frequency domain position of the DMRS in the second resource.

The network device may configure the time-domain position and/or the frequency-domain position at which the terminal device sends the DMRS. Alternatively, the network device and the terminal device may specify a sending location of the DMRS in a protocol.

In a possible implementation, the terminal device sends one pilot symbol on an allocated frequency domain bandwidth.

In a possible implementation, the second resource includes a plurality of frequency domain resources, and the terminal device sends the pilot signal on a part of frequency domain resources. For example, the terminal device sends the pilot resource element on a part of resource blocks or subcarriers on an allocated frequency domain bandwidth.

In a possible implementation, when a quantity of received uplink grants corresponding to the first BSR indicating that the volume of to-be-transmitted data is 0 is greater than a second threshold, the DMRS is sent to the network device on the second resource.

When receiving the uplink grant sent by the network device, the terminal device collects statistics about the quantity of received uplink grants corresponding to the first BSR indicating that the volume of to-be-transmitted data is 0, that is, a quantity of times that the terminal device has no data to send and receives the uplink grant sent by the network device. Only when the quantity is greater than or equal to the second threshold, the DMRS is sent.

In the foregoing implementation, the terminal device further receives second configuration information sent by the network device, where the second configuration information indicates the second threshold.

The second threshold may be configured by the network device for the terminal device, or may be specified in a protocol.

S250: The network device detects a first power and a second power.

The first resource corresponds to the first power. The second resource corresponds to the second power. The DMRS is detected on the second resource.

When the DMRS is detected on the second resource, it may be determined that the terminal device sends the DMRS.

The network device may determine, based on the first power and the second power, that the terminal device receives the uplink grant.

For example, when the first power is less than a threshold, and the second power is greater than the threshold, it may be determined that the terminal device receives the uplink grant.

For another example, when a ratio of the second power to the first power is greater than a threshold, it may be determined that the terminal device receives the uplink grant.

In a possible implementation, the network device determines a power difference based on the first power and the second power, and determines, based on the power difference, that the terminal device receives the uplink grant.

When the power difference is greater than a first threshold, it is determined that the terminal device receives the uplink grant.

The first threshold may be (pre)configured, or specified in a protocol.

It should be understood that in embodiments of this application, sequence numbers of the foregoing processes do not mean execution sequences. The execution sequences of the processes should be determined based on functions and internal logic of the processes, and should not be construed as any limitation on the implementation processes of embodiments of this application.

It should be understood that the network device cannot know in advance whether the terminal device has to-be-transmitted data during detection. To correctly recognize whether the terminal device has data to send or correctly receives the uplink grant, the network device may detect the data and the pilot signal in the following several manners.

### Manner 1

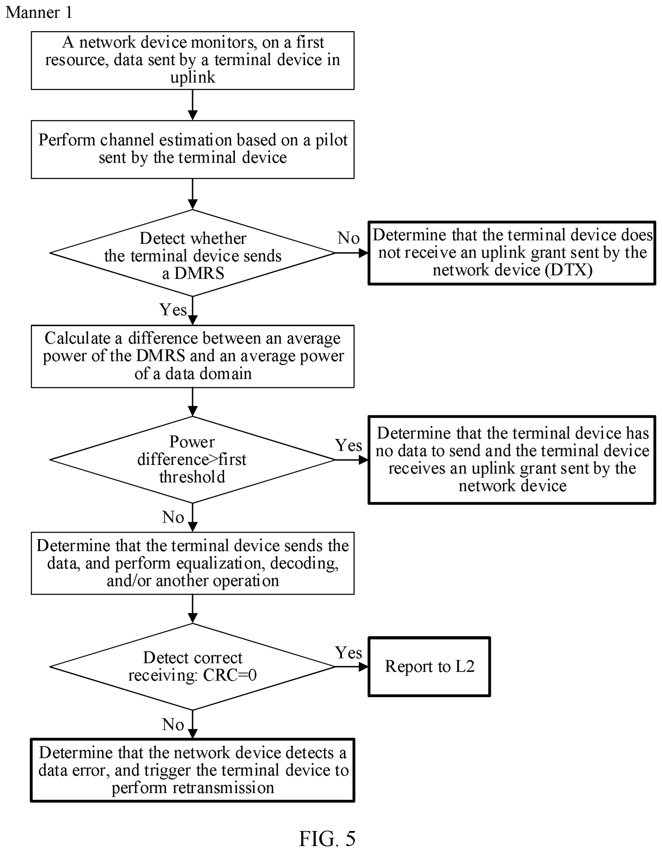

As shown in FIG. 5, after the network device sends the uplink grant to the corresponding terminal device, if feedback of a latest BSR sent by the terminal device indicates that there is no to-be-transmitted data, when receiving a data slot sent by the terminal device, the network device first detects whether the terminal device sends a DMRS; and if the terminal device does not send the DMRS, the network device may determine that the terminal device detects no uplink grant, that is, the terminal device is in a discrete transmission DTX state.

When it is determined, based on a signal to interference plus noise ratio SINR, that the terminal device sends the DMRS, the first power for data transmission and the second power for DMRS transmission are determined, and the power difference is determined based on the first power and the second power.

When a difference between an average power of the first resource and an average power of the second resource is greater than (or equal to) the first threshold, it is determined that the terminal device does not send data and the terminal device receives the uplink grant, that is, the terminal device is in an energy saving state, so that data equalization and decoding may not be performed.

When a difference between an average power of the first resource and an average power of the second resource is less than (or equal to) the first threshold, equalization and decoding are performed on the data, and whether the data is correctly received is determined based on a cyclic redundancy check CRC code.

When it is detected that a check bit indicates correct (that is, CRC=0), it is determined that the data is correctly received, and the corresponding data and a result are reported to a data link layer L2.

When it is detected that a check bit indicates incorrect (that is, CRC=1), it is determined that the network device detects a data error, and the terminal device is triggered to perform retransmission.

According to the foregoing manner, whether the terminal device sends the data may be determined by using a power difference between a pilot and a data domain, so that data detection complexity of the network device can be reduced, and it can be further determined that the terminal device is in the energy saving state.

### Manner 2

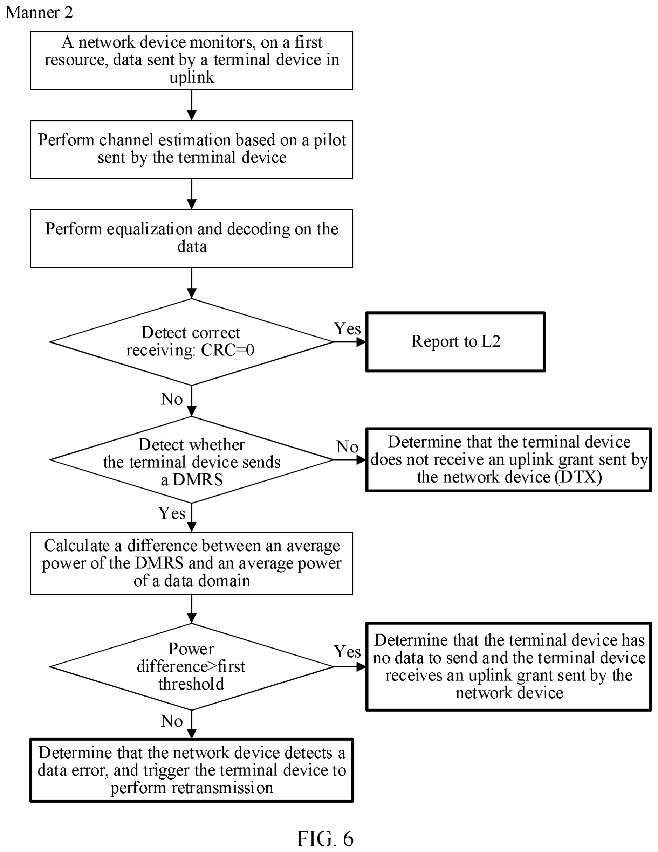

As shown in FIG. 6, after sending the uplink grant to the corresponding terminal device, the network device performs equalization and decoding on data on the first resource, and determines, based on a cyclic redundancy check CRC code, whether the data is correctly received.

When it is detected that a check bit indicates correct (that is, CRC=0), it is determined that the data is correctly received, and the corresponding data and a result are reported to a data link layer L2.

When detecting that a check bit indicates incorrect (that is, CRC=1), the network device further detects, based on an SINR (including a PostSINR/PreSINR), whether the terminal device sends the DMRS. When it is determined that the terminal device does not send the DMRS, it is determined that the terminal device detects no uplink grant, that is, the terminal device is in a discrete transmission DTX state.

When it is determined that the terminal device sends the DMRS, the first power corresponding to the first resource and the second power corresponding to the second resource are determined, and the power difference is determined based on the first power and the second power.

When a difference between an average power of the DMRS and an average power of a data resource is greater than (or equal to) the first threshold, it is determined that the terminal device does not send data and the terminal device receives the uplink grant, that is, the terminal device is in an energy saving state, so that data retransmission and PDCCH CCE adjustment do not need to be performed.

When a difference between an average power of the DMRS and an average power of a data resource is less than (or equal to) the first threshold, it is determined that the network device detects a data error, and the terminal device is triggered to perform retransmission.

In the foregoing manner, the following three states can be further determined by using a data detection result, a pilot detection result, and a power difference between a pilot and the data: The network device detects the data error, the terminal device does not receive the uplink grant, and the terminal device saves energy.

### Manner 3

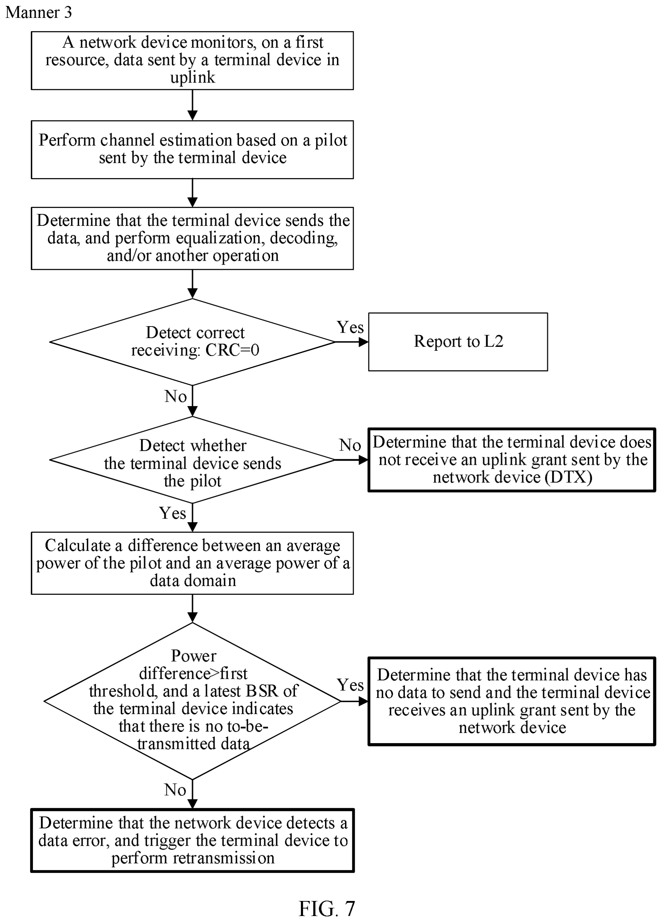

As shown in FIG. 7, after sending the uplink grant to the corresponding terminal device, the network device performs equalization and decoding on data on the first resource, and determines, based on a cyclic redundancy check CRC code, whether the data is correctly received.

When it is detected that a check bit indicates correct (that is, CRC=0), it is determined that the data is correctly received, and the corresponding data and a result are reported to a data link layer L2.

When detecting that a check bit indicates incorrect (that is, CRC=1), the network device further detects, based on an SINR (including a PostSINR/PreSINR), whether the terminal device sends the DMRS. When it is determined that the terminal device does not send the DMRS, it is determined that the terminal device detects no uplink grant, that is, the terminal device is in a discrete transmission DTX state.

When it is determined that the terminal device sends the DMRS, the first power corresponding to the first resource and the second power corresponding to the second resource are determined, and the power difference is determined based on the first power and the second power.

When a difference between an average power of the DMRS and an average power of a data resource is greater than (or equal to) the first threshold, and a latest BSR sent by the terminal device indicates that the volume of to-be-transmitted data of the terminal device is 0, it is determined that the terminal device does not send data and the terminal device receives the uplink grant, that is, the terminal device is in an energy saving state, so that data retransmission and PDCCH CCE adjustment do not need to be performed.

When a difference between an average power of the DMRS and an average power of a data resource is less than (or equal to) the first threshold, and a latest BSR sent by the terminal device indicates that the volume of to-be-transmitted data of the terminal device is 0, it is determined that the network device detects a data error, and the terminal device is triggered to perform retransmission.

In the foregoing manner, the following three states can be further determined by using a data detection result, a pilot detection result, and a power difference between a pilot and the data with reference to whether the BSR indicates 0: The network device detects the data error, the terminal device does not receive the uplink grant, and the terminal device saves energy. This reduces a false determining probability.

According to the solution of this application, minimum-delay scheduling of the terminal device can be supported, and when the terminal device has no service transmission, it is ensured that power consumption of the terminal device is reduced, where the power consumption can be reduced by a maximum of 93%.

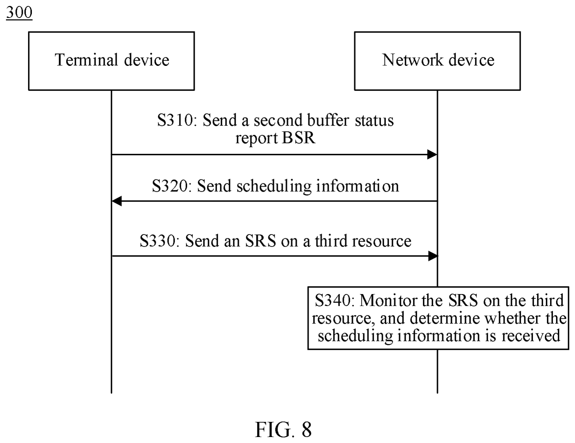

FIG. 8 is a schematic flowchart of a data transmission method 300 according to an embodiment of this application.

As shown in FIG. 8, the method includes at least the following steps.

S310: A terminal device sends a second buffer status report BSR to a network device; and correspondingly, the network device receives the second BSR.

The second BSR indicates that a volume of to-be-transmitted data of the terminal device is 0.

S320: The network device sends scheduling information to the terminal device based on the BSR; and correspondingly, the terminal device receives the scheduling information.

The scheduling information may be an uplink grant UL grant or a downlink resource scheduling DL grant.

The scheduling information includes indication information, and the indication information indicates sending of a sounding reference signal SRS on a third resource. In other words, the scheduling information includes the indication information used to trigger the terminal device to send the SRS, and the SRS is sent on the third resource.

S330: The terminal device sends the SRS based on the scheduling information.

S340: The network device monitors the SRS on the third resource, and determines whether the scheduling information is received.

The network device monitors the SRS on the third resource, and when detecting the SRS on the third resource, determines that the scheduling information is received, or when not detecting the SRS on the third resource, determines that the scheduling information is not received.

Generally, the UL grant and the DL grant are usually carried on a same or adjacent time resources for sending. Therefore, channel quality for sending the UL grant and the DL grant is the same or similar. Therefore, the indication information may be carried in the UL grant, or may be carried in the DL grant. For example, when the indication information is carried in the DL grant, the terminal device receives the DL grant, and sends the SRS based on the indication information in the DL grant. When detecting the SRS, the network device may determine that the terminal device receives the DL grant, and may consider that the terminal device also receives the UL grant.

It should be understood that in embodiments of this application, sequence numbers of the foregoing processes do not mean execution sequences. The execution sequences of the processes should be determined based on functions and internal logic of the processes, and should not be construed as any limitation on the implementation processes of embodiments of this application.

It should be understood that the network device cannot know in advance whether the terminal device has to-be-transmitted data during detection. To correctly recognize whether the terminal device has data to send or correctly receives the UL grant, the network device may detect data and a pilot signal in the following manner.

### Manner 4

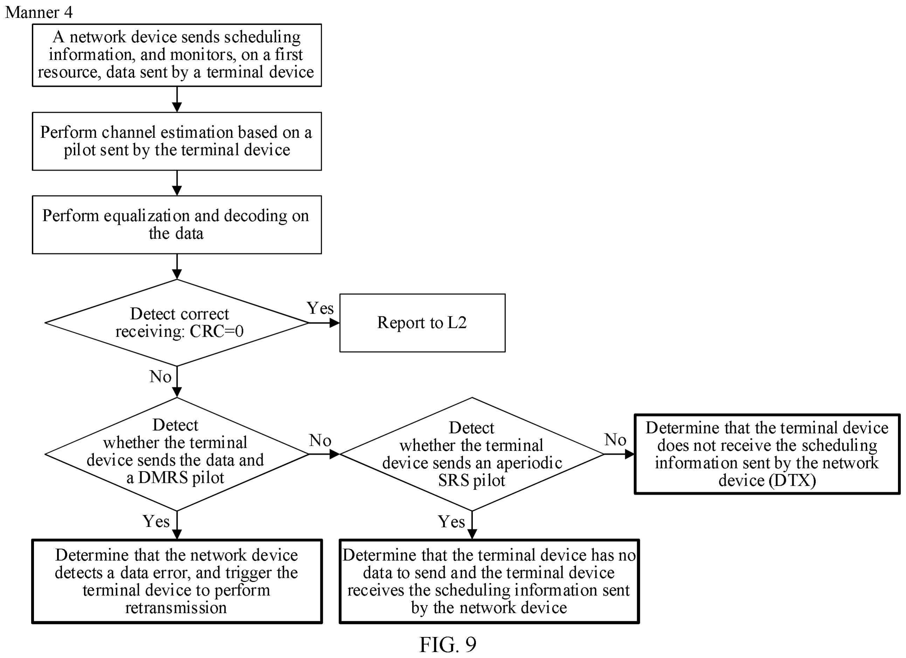

As shown in FIG. 9, the network device adds the indication information to the scheduling information sent to the terminal device, where the indication information triggers the terminal device to send an aperiodic SRS. The network device detects, on a first resource, data sent by the terminal device, performs channel estimation, equalization, and decoding, and determines, based on a cyclic redundancy check CRC code, whether the data is correctly received.

When it is detected that a check bit indicates correct (that is, CRC=0), it is determined that the data is correctly received, and the corresponding data and a result are reported to a data link layer L2.

When detecting that a check bit indicates incorrect (that is, CRC=1), the network device needs to further detect, based on a SINR (including a PostSINR/PreSINR), whether the terminal device sends a DMRS. When determining that the terminal device sends the data and the DMRS, the network device determines that the data of the terminal device is not correctly demodulated, and triggers the terminal device to perform retransmission.

When determining that the terminal device does not send the data or a DMRS, the network device further detects whether the terminal device sends an aperiodic SRS pilot. If it is detected that the terminal device sends the aperiodic SRS pilot, it is determined that the terminal device does not send the data and the scheduling information received by the terminal device includes the uplink grant, so that data retransmission and PDCCH CCE adjustment do not need to be performed.

If it is detected that the terminal device does not send the aperiodic SRS pilot, it is determined that the terminal device does not detect that the scheduling information includes the uplink grant, that is, the terminal device is in a discrete transmission DTX state.

According to the foregoing manner, the following three states can be determined by triggering SRS signaling and detecting the SRS: The network device detects a data error, the terminal device does not receive the uplink grant, and the terminal saves energy.

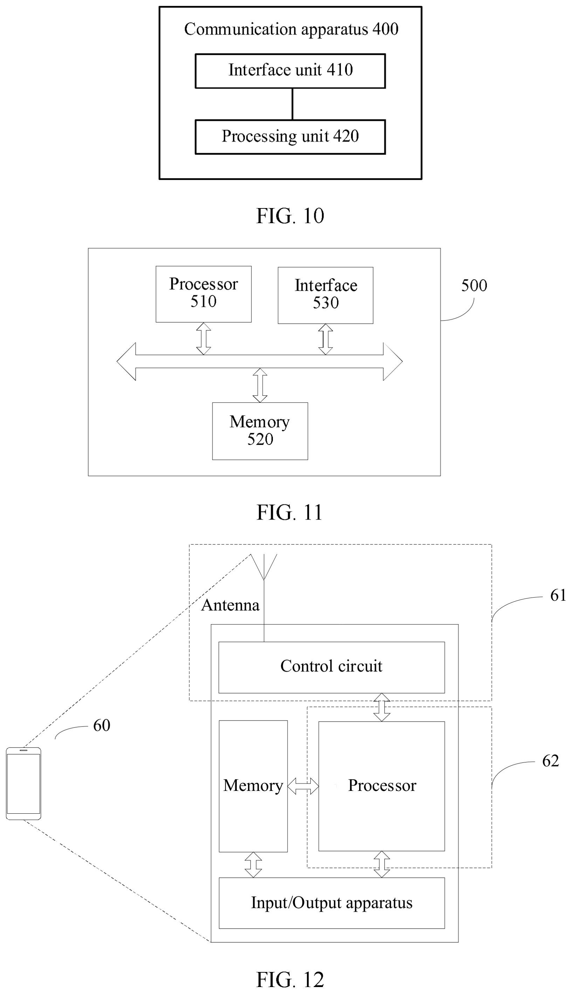

According to the foregoing methods, FIG. 10 is a diagram of a wireless communication apparatus 400 according to an embodiment of this application.

As shown in FIG. 10, the communication apparatus 400 may include an interface unit 410 and a processing unit 420.

In a possible design, the communication apparatus 400 may correspond to the network device in the foregoing method embodiments.

For example, the communication apparatus 400 may correspond to the network device (or a base station or a gNB) in the method 200 according to embodiments of this application. The interface unit 410 in the communication apparatus 400 is configured to: receive a first buffer status report BSR from a terminal device, where the first BSR indicates that a volume of to-be-transmitted data of the terminal device is 0; and send an uplink grant based on the first BSR, where the uplink grant indicates a first resource and a second resource.

The processing unit 420 in the communication apparatus 400 is configured to: detect a first power corresponding to the first resource; detect a second power corresponding to the second resource, and detect that there is a demodulation reference signal DMRS on the second resource; and determine, based on the first power and the second power, that the terminal device receives the uplink grant.

In a possible implementation, the processing unit 420 is specifically configured to: determine a power difference based on the first power and the second power; and determine, based on the power difference, that the terminal device receives the uplink grant.

In a possible implementation, the processing unit 420 is specifically configured to: when the power difference is greater than a first threshold, determine that the terminal device receives the uplink grant.

In a possible implementation, the interface unit 410 is further configured to send first configuration information to the terminal device, where the first configuration information indicates a time domain position and/or a frequency domain position of the DMRS in the second resource.

The interface unit 410 in the communication apparatus 400 performs receiving and sending operations performed by the network device in the foregoing method embodiments, and the processing unit 420 performs operations other than the receiving and sending operations.

For example, the communication apparatus 400 may correspond to the network device in the method 300 according to embodiments of this application. The interface unit 410 in the communication apparatus 400 is configured to: receive a second buffer status report BSR from a terminal device, where the second BSR indicates that a volume of to-be-transmitted data of the terminal device is 0; and send scheduling information based on the second BSR, where the scheduling information includes indication information, and the indication information indicates sending of a sounding reference signal SRS on a third resource.

The processing unit 420 in the communication apparatus 400 is configured to: monitor the SRS on the third resource, and determine whether the scheduling information is received.

In a possible implementation, the processing unit 420 is specifically configured to: when the SRS is detected on the third resource, determine that the scheduling information is received; or when the SRS is not detected on the third resource, determine that the scheduling information is not received.

The interface unit 410 in the communication apparatus 400 performs receiving and sending operations performed by the network device (or a base station or a gNB) in the foregoing method embodiments, and the processing unit 420 performs operations other than the receiving and sending operations.

In another possible design, the communication apparatus 400 may alternatively correspond to the terminal device in the foregoing method embodiments.

For example, the communication apparatus 400 may correspond to the terminal device in the method 200 according to embodiments of this application. The interface unit in the communication apparatus 400 may include a sending unit. The interface unit 410 in the communication apparatus 400 is configured to: send a first buffer status report BSR to a network device, where the first BSR indicates that a volume of to-be-transmitted data of the terminal device is 0; receive an uplink grant from the network device, where the uplink grant indicates a first resource and a second resource; and send a demodulation reference signal DMRS to the network device on the second resource. The processing unit is configured to shut down a symbol or reduce a power on the first resource.

In a possible implementation, the interface unit 410 is further configured to receive first configuration information from the network device, where the first configuration information indicates a time domain position and/or a frequency domain position of the DMRS in the second resource.

In a possible implementation, the interface unit 410 is specifically configured to: when a quantity of received uplink grants corresponding to the first BSR indicating that the volume of to-be-transmitted data is 0 is greater than a second threshold, send the DMRS to the network device on the second resource.

In a possible implementation, the interface unit 410 is further configured to receive second configuration information from the network device, where the second configuration information indicates the second threshold.

The interface unit 410 in the communication apparatus 400 performs receiving and sending operations performed by the terminal device in the foregoing method embodiments, and the processing unit 420 performs operations other than the receiving and sending operations.

According to the foregoing methods, FIG. 11 is a diagram of a communication apparatus 500 according to an embodiment of this application. As shown in FIG. 11, the apparatus 500 may be a terminal device, or may be a network device.

The apparatus 500 may include a processor 510 (that is, an example of a processing unit) and a memory 520. The memory 520 is configured to store instructions. The processor 510 is configured to execute the instructions stored in the memory 520, so that the apparatus 500 implements the steps performed by the terminal device or the network device in the method 200 or the method 300.

Further, the apparatus 500 may further include an interface 530 (that is, an example of a receiving unit module). Further, the processor 510, the memory 520, and the interface 530 may communicate with each other through an internal connection path, to transfer a control signal and/or a data signal. The memory 520 is configured to store a computer program. The processor 510 may be configured to invoke the computer program from the memory 520 and run the computer program, to control the interface 530 to receive a signal or send a signal, to complete the steps performed by the terminal device or the network device in the foregoing methods. The memory 520 may be integrated into the processor 510, or may be separated from the processor 510.

In a possible implementation, if the communication apparatus 500 is a communication device, the interface 530 is a receiver or a transmitter. The receiver and the transmitter may be a same physical entity or different physical entities. When the receiver and the transmitter are a same physical entity, the receiver and the transmitter may be collectively referred to as a transceiver.

In a possible implementation, if the communication apparatus 500 is a chip or a circuit, the interface 530 is an input interface, or the interface 530 is an output interface.

In an implementation, it may be considered that a function of the interface 530 is implemented by using a transceiver circuit or a dedicated transceiver chip. It may be considered that the processor 510 is implemented by using a dedicated processing chip, a processing circuit, a processor, or a general-purpose chip.

In another implementation, it may be considered that a communication device provided in this embodiment of this application is implemented by using a general-purpose computer. To be specific, program code for implementing functions of the processor 510 and the interface 530 is stored in the memory 520, and the general-purpose processor implements the functions of the processor 510 and the interface 530 by executing the code in the memory 520.

For concepts, explanations, detailed descriptions, and other steps of the apparatus 500 that are related to the technical solutions provided in embodiments of this application, refer to the descriptions of the content in the foregoing methods or other embodiments. Details are not described herein again.

FIG. 12 is a diagram of a structure of a terminal device 60 according to this application. For ease of description, FIG. 12 shows only main components of the communication apparatus. As shown in FIG. 12, the terminal device 60 includes a processor, a memory, a control circuit, an antenna, and an input/output apparatus.

The processor is mainly configured to: process a communication protocol and communication data, control the entire terminal device, execute a software program, and process data of the software program, for example, is configured to support the terminal device in performing the actions described in the foregoing embodiments of the indication method for transmitting a precoding matrix. The memory is mainly configured to store the software program and the data, for example, store a codebook described in the foregoing embodiments. The control circuit is mainly configured to convert a baseband signal and a radio frequency signal and process the radio frequency signal. The control circuit and the antenna together may also be referred to as a transceiver, and are mainly configured to receive and send a radio frequency signal in a form of an electromagnetic wave. The input/output apparatus, for example, a touchscreen, a display, or a keyboard, is mainly configured to: receive data input by a user and output data to the user.

After the communication apparatus is powered on, the processor may read the software program in the storage unit, explain and execute instructions of the software program, and process the data of the software program. When data needs to be sent wirelessly, the processor performs baseband processing on the to-be-sent data, and then outputs a baseband signal to a radio frequency circuit. The radio frequency circuit performs radio frequency processing on the baseband signal, and then sends, via the antenna, a radio frequency signal in a form of an electromagnetic wave. When data is sent to the terminal device, the radio frequency circuit receives the radio frequency signal via the antenna, converts the radio frequency signal into a baseband signal, and outputs the baseband signal to the processor. The processor converts the baseband signal into data, and processes the data.

A person skilled in the art may understand that for ease of description, FIG. 12 shows only one memory and one processor. In an actual terminal device, there may be a plurality of processors and memories. The memory may also be referred to as a storage medium, a storage device, or the like. This is not limited in embodiments of this application.

In an optional implementation, the processor may include a baseband processor and a central processing unit. The baseband processor is mainly configured to process the communication protocol and the communication data. The central processing unit is mainly configured to: control the entire terminal device, execute the software program, and process the data of the software program. The processor in FIG. 12 integrates functions of the baseband processor and the central processing unit. A person skilled in the art may understand that the baseband processor and the central processing unit may alternatively be processors independent of each other, and are interconnected by using a technology such as a bus. A person skilled in the art may understand that the terminal device may include a plurality of baseband processors to adapt to different network standards, the terminal device may include a plurality of central processing units to enhance processing capabilities of the terminal device, and the components of the terminal device may be connected by using various buses. The baseband processor may alternatively be expressed as a baseband processing circuit or a baseband processing chip. The central processing unit may alternatively be expressed as a central processing circuit or a central processing chip. A function of processing the communication protocol and the communication data may be built in the processor, or may be stored in the storage unit in a form of the software program, and the processor executes the software program to implement a baseband processing function.

As shown in FIG. 12, the terminal device 60 includes an interface unit 61 and a processing unit 62. The interface unit may also be referred to as a transceiver, a transceiver machine, a transceiver apparatus, or the like. Optionally, a component configured to implement a receiving function in the interface unit 61 may be considered as a receiving unit, and a component configured to implement a sending function in the interface unit 61 may be considered as a sending unit. In other words, the interface unit 61 includes the receiving unit and the sending unit. For example, the receiving unit may also be referred to as a receiver, a receive machine, or a receiving circuit, and the sending unit may also be referred to as a transmitter, a transmit machine, or a transmitting circuit.

The terminal device shown in FIG. 12 may perform the actions performed by the terminal device in the method 200 or the method 300. To avoid repetition, detailed descriptions thereof are omitted herein.

An embodiment of this application further provides a computer-readable storage medium. The computer-readable storage medium stores computer instructions used to implement the method performed by the network device or the terminal device in the foregoing method embodiments.

For example, when a computer program is executed by a computer, the computer is enabled to implement the method performed by the network device or the terminal device in the foregoing method embodiments.

An embodiment of this application further provides a computer program product including instructions. When the instructions are executed by a computer, the computer is enabled to implement the method performed by the terminal device or the method performed by the network device or the terminal device in the foregoing method embodiments.

An embodiment of this application further provides a communication system. The communication system includes the network device and the terminal device in the foregoing embodiments.

For explanations and beneficial effects of related content of any one of the apparatuses provided above, refer to the corresponding method embodiments provided above. Details are not described herein again.

It should be understood that the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, discrete hardware component, or the like. The general-purpose processor may be a microprocessor, or the processor may be any conventional processor or the like.

It should be further understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not restrictive description, many forms of random access memories (random access memories, RAMs) may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or a part of the foregoing embodiments may be implemented by using software, hardware, firmware, or any combination thereof. When software is used to implement the foregoing embodiments, all or a part of the foregoing embodiments may be implemented in a form of a computer program product. The computer program product includes one or more computer instructions or computer programs. When the computer instructions or the computer programs are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

A person of ordinary skill in the art may be aware that the units and algorithm steps in the examples described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. It may be clearly understood by a person skilled in the art that for the purpose of convenient and brief description, for a detailed working process of the foregoing system, apparatus, and unit, refer to a corresponding process in the foregoing method embodiments. Details are not described herein again. In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments. In addition, functional units in embodiments of this application may be integrated into one processing unit, or each of the units may exist alone physically, or two or more units may be integrated into one unit. When the functions are implemented in a form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes any medium that can store program code, such as a USB flash disk, a removable hard disk drive, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, comprising:
receiving a first buffer status report BSR from a terminal device, wherein the first BSR indicates that a volume of to-be-transmitted data of the terminal device is 0;
sending an uplink grant based on the first BSR, wherein the uplink grant indicates a first resource and a second resource;
detecting a first power corresponding to the first resource;
detecting a second power corresponding to the second resource, and detecting that there is a demodulation reference signal DMRS on the second resource; and
determining, based on the first power and the second power, that the terminal device receives the uplink grant.

2. The method according to claim 1, wherein determining, based on the first power and the second power, that the terminal device receives the uplink grant comprises:
determining a power difference based on the first power and the second power; and
determining, based on the power difference, that the terminal device receives the uplink grant.

3. The method according to claim 2, wherein determining, based on the power difference, that the terminal device receives the uplink grant comprises:
when the power difference is greater than a first threshold, determining that the terminal device receives the uplink grant.

4. The method according to any one of claims 1 to 3, wherein the method further comprises:
sending first configuration information to the terminal device, wherein the first configuration information indicates a time domain position and/or a frequency domain position of the DMRS in the second resource.

5. A data transmission method, wherein the method is applied to a terminal device and comprises:
sending a first buffer status report BSR to a network device, wherein the first BSR indicates that a volume of to-be-transmitted data of the terminal device is 0;
receiving an uplink grant from the network device, wherein the uplink grant indicates a first resource and a second resource;
sending a demodulation reference signal DMRS to the network device on the second resource; and
shutting down a symbol or reducing a power on the first resource.

6. The method according to claim 5, wherein the method further comprises:
receiving first configuration information from the network device, wherein the first configuration information indicates a time domain position and/or a frequency domain position of the DMRS in the second resource.

7. The method according to claim 5 or 6, wherein sending the DMRS to the network device on the second resource comprises:
when a quantity of received uplink grants corresponding to the first BSR indicating that the volume of to-be-transmitted data is 0 is greater than a second threshold, sending the DMRS to the network device on the second resource.

8. The method according to claim 7, wherein the method further comprises: receiving second configuration information from the network device, wherein the second configuration information indicates the second threshold.

9. A data transmission method, comprising:
receiving a second buffer status report BSR from a terminal device, wherein the second BSR indicates that a volume of to-be-transmitted data of the terminal device is 0;
sending scheduling information based on the second BSR, wherein the scheduling information comprises indication information, and the indication information indicates sending of a sounding reference signal SRS on a third resource; and
monitoring the SRS on the third resource and determining whether the scheduling information is received.

10. The method according to claim 9, wherein monitoring the SRS on the third resource and determining whether the scheduling information is received comprises:
when the SRS is detected on the third resource, determining that the scheduling information is received; or
when the SRS is not detected on the third resource, determining that the scheduling information is not received.

11. A data transmission apparatus, comprising:
an interface unit, configured to: receive a first buffer status report BSR from a terminal device, wherein the first BSR indicates that a volume of to-be-transmitted data of the terminal device is 0; and send an uplink grant based on the first BSR, wherein the uplink grant indicates a first resource and a second resource; and
a processing unit, configured to: detect a first power corresponding to the first resource; detect a second power corresponding to the second resource, and detect that there is a demodulation reference signal DMRS on the second resource; and determine, based on the first power and the second power, that the terminal device receives the uplink grant.

12. The apparatus according to claim 11, wherein the processing unit is specifically configured to:
determine a power difference based on the first power and the second power; and
determine, based on the power difference, that the terminal device receives the uplink grant.

13. The apparatus according to claim 12, wherein the processing unit is specifically configured to:
when the power difference is greater than a first threshold, determine that the terminal device receives the uplink grant.

14. The apparatus according to any one of claims 11 to 13, wherein the interface unit is further configured to:
send first configuration information to the terminal device, wherein the first configuration information indicates a time domain position and/or a frequency domain position of the DMRS in the second resource.

15. A data transmission apparatus, comprising:
an interface unit, configured to: send a first buffer status report BSR to a network device, wherein the first BSR indicates that a volume of to-be-transmitted data of the terminal device is 0; receive an uplink grant from the network device, wherein the uplink grant indicates a first resource and a second resource; and send a demodulation reference signal DMRS to the network device on the second resource; and
a processing unit, configured to shut down a symbol or reduce a power on the first resource.

16. The apparatus according to claim 15, wherein the interface unit is further configured to:
receive first configuration information from the network device, wherein the first configuration information indicates a time domain position and/or a frequency domain position of the DMRS in the second resource.

17. The apparatus according to claim 15 or 16, wherein the interface unit is specifically configured to:
when a quantity of received uplink grants corresponding to the first BSR indicating that the volume of to-be-transmitted data is 0 is greater than a second threshold, send the DMRS to the network device on the second resource.

18. The apparatus according to claim 17, wherein the interface unit is further configured to:
receive second configuration information from the network device, wherein the second configuration information indicates the second threshold.

19. A data transmission apparatus, comprising:
an interface unit, configured to: receive a second buffer status report BSR from a terminal device, wherein the second BSR indicates that a volume of to-be-transmitted data of the terminal device is 0; and send scheduling information based on the second BSR, wherein the scheduling information comprises indication information, and the indication information indicates sending of a sounding reference signal SRS on a third resource; and
a processing unit, configured to: monitor the SRS on the third resource, and determine whether the scheduling information is received.

20. The apparatus according to claim 19, wherein the processing unit is specifically configured to:
when the SRS is detected on the third resource, determine that the scheduling information is received; or
when the SRS is not detected on the third resource, determine that the scheduling information is not received.

21. A communication apparatus, comprising:
a processor, wherein the processor is configured to execute a program or instructions, so that the apparatus performs the method according to any one of claims 1 to 4, or the apparatus performs the method according to claim 9 or 10.

22. A communication apparatus, comprising:
a processor, wherein the processor is configured to execute a program or instructions, so that the apparatus performs the method according to any one of claims 5 to 8.

23. A computer-readable storage medium, wherein the computer-readable storage medium stores a computer program; and when the computer program is run on a computer, the computer performs the method according to any one of claims 1 to 4, the method according to any one of claims 5 to 8, or the method according to claim 9 or 10.

24. A computer program product, comprising computer program code, wherein when the computer program code is run, the method according to any one of claims 1 to 4, the method according to any one of claims 5 to 8, or the method according to claim 9 or 10 is implemented.
